# EUROPEAN PATENT APPLICATION

(11) **EP 4 001 958 A1**
(43) Date of publication of application: **25.05.2022**
(21) Application number: 20465589.8
(22) Date of filing: 12.11.2020
(51) Int. Cl.: G01S 13/04, G01S 7/292, G01S 13/88, G01S 13/86, G01S 7/00

(54) **PASSENGER COUNTING DEVICE AND PUBLIC TRANSPORT VEHICLE**

(71) Applicant: Continental Automotive GmbH, 30165 Hannover (DE)
(72) Inventor: Boran, Dinu, 81737 Munich (DE)
(74) Representative: Continental Corporation

(57) **Abstract**

The invention relates to a passenger counting device (16) comprising a mmWave radar sensor (18) configured to generate a radar pulse (26) to a predefined area (28), the radar pulse (26) having a wavelength in the mm range and the mmWave radar sensor (18) being configured to receive a reflection signal from the predefined area (28). Further, the passenger counting device (16) comprises a control unit (30) to obtain a signal strength of the reflection signals over a reception time period during which the reflection signal is received by the mmWave radar sensor (18), the control unit further being configured to count a number of passengers (14) according to the signal strength, considering that the signal strength is weakened in proportion to the reception time period. Further, the invention relates to a public transport vehicle (10) comprising the passenger counting device (16).

## Description

The invention relates to a passenger counting device to count passenger in a public transport vehicle, and a public transport vehicle which comprises such a passenger counting device.

Automated passenger counting allows to make informed decisions about where passengers are riding and when they are doing it. These are critical information for making service changes, establishing budgets, securing funding, and responding to changing ridership patterns. Passenger counting can be very useful for the scheduling and planning of the public transport, since it enables to set the transport service according to the observed demand in order to improve the level of service provided to the users.

Nowadays, passenger counting operations are often developed on surveys, throughout the territory and using manual procedures. Even though these may be capable of providing highly accurate values, which can be taken as a reference point in analyzing the precision of the automatic systems, the manual procedures in surveys are usually not homogeneous since they inevitably depend on the operator who performs them and may also be influenced by the time of the day - early morning versus the last hours of the day - and by a repetitive task.

Automated passenger counting systems can be much more appropriate and of greater interest, as related to this short analysis.

Automated passenger counting systems help operators plan their timetables and routes and justify any grants they get for running a particular service. Another benefit could be the increase in fare revenue produced by cross-checking passenger numbers with issued tickets. Automated passenger counting systems can provide reliable data at low cost, no matter how busy the service. With a passenger counting system, transport managers gain accurate key performance measures like passengers per mile, cost per passenger and number of passengers per driver.

The key benefits include:
- Obtain information for scheduling and forecasting;
- Justify grants;
- Increase collected fare revenue;
- Save on training and employing people to manually count passengers;
- Accuracy;
- Analyze key performance indicators like passengers per mile and cost per passenger;
- Automatically generate reports;
- Monitor passenger numbers over time;
- Use the data with confidence to make important service-related decisions.

The passenger counting technologies available on the market are various and their issues are of different kinds such that to date no solution can be considered better than others or economically preferable a priori.

For example, to provide an automated passenger counting systems, a treadle mat can be installed on a door. However, with such a mat, only passengers entering a vehicle can be counted, it is not possible to count passengers in an unspecified target area at the same time.

Accordingly, a camera may also be used for counting passengers in a target area. In other words, passengers may be counted by using a technology such as facial recognition by using the camera. However, such a conventional passengers counting method and apparatus may have the problem that counting passengers by using a camera may make passengers feel uncomfortable.

Object of the invention is to provide a passenger counting device which is able to overcome the above-described issues.

This object is attaint with a passenger counting device with the feature combination of independent claim 1.

A public transport vehicle comprising such a passenger counting device is the subject-matter of a further independent claim.

Advantageous embodiments of the invention are subject-matter of the dependent claims.

A passenger counting device to count passengers in a public transport vehicle comprises a mmWave radar sensor configured to generate a radar pulse to a predefined area in a public transport vehicle, the radar pulse having a wavelength in the mm range, the radar sensor further being configured to receive a reflection signal from the predefined are. Further, the passenger counting device comprises a control unit configured to obtain a signal strength of the reflection signal over a reception time period during which the reflection signal is received by the radar sensor. The control unit is further configured to count a number of passengers according to the signal strength, considering that the signal strength is weakened in proportion to the reception time period.

mmWave is a special class of radar technology that uses short wavelength electromagnetic waves. Radar systems transmit electromagnetic wave signals that objects in their path then reflect. By capturing the reflected signal, a radar system can determine the range, velocity and angle of the objects. mmWave radars transmit signals with a wavelength that is in the millimeter range. This is considered a short wavelength in the electromagnetic spectrum and is one of the advantages of this technology. Indeed, the size of system components such as the antennas required to process mmWave signals is small. Another advantage of short wavelengths is the high accuracy.

Using a mmWave radar sensor as main component on the passenger counting device is a better solution than using a video camera due to low cost, the lesser required maintenance, the operating abilities day or night on the same level of performance, the good poor-weather performance, the less memory that is needed, the better robustness and the less processing capacity needed.

In an advantageous embodiment, the wavelength of the radar pulse lies in a range of 1 mm to 6 mm, in particular about 4 mm.

A mmWave radar sensor operating at a wavelength of about 4 mm (and in particular with a corresponding frequency of 76-81 GHz) will have the ability to detect movements that are as small as a fraction of a millimeter.

Additionally, the passenger counting device could further comprise a vision camera being configured to take a series of pictures of the predefined area in the public transport vehicle, the control unit being configured to analyze the pictures taken by the vision camera to count a number of passengers in the taken pictures.

Together, a mmWave radar sensor and a vision camera may constitute a high-end automatic passenger counting device for public transport.

The vision camera in particular can be an IR camera.

In one embodiment the passenger counting device comprises a data logger configured to safe data about the numbers of passengers counted by the control unit, the passenger counting device further comprising a WIFI module configured to wireless transfer data from the control unit to the data logger.

In a further advantageous embodiment, the WIFI module is configured to wireless transfer also data from the mmWave radar sensor and/or the vision camera to the control unit.

Using a WIFI module, wireless data transfer is enabled in the public transport vehicle and the provision of wires within the vehicle can be omitted.

A public transport vehicle comprises the above-described passenger counting device with the mmWave radar sensor.

In one embodiment the mmWave radar sensor is located in the vehicle such that the mmWave radar sensor is invisible to the passengers, wherein the mmWave radar sensor in particular being hidden behind a cover.

Due to short wavelengths of mmWave radar signals, system components, such as antennas, may be of relatively small size. The short wavelengths of mmWave radar signals also allow functionality in unfavorable environmental conditions such as rain, fog, dust and snow, and can penetrate certain materials such as plastic, drywall and clothing. Therefore, it is possible to hide the mmWave radar sensor behind a cover in the public transport vehicle.

In one implementation, the public transport vehicle comprises a vehicle tracking module, in particular a GPS antenna, the vehicle tracking module having a communication unit to send GPS signals to the data logger, the data logger being configured to safe the received GPS signals.

An automated passenger counting system like the above-described passenger counting device on its own already provides valuable information, but when a vehicle tracking module is added, it is possible to track where the public transport vehicle is located at the same time as the information about how many passengers are on it is registered.

One advantageous embodiment of the invention is described in the following with reference to the accompanying drawings, wherein:
- Fig. 1: shows a perspective view onto a public transport vehicle comprising a passenger counting device; and
- Fig. 2: schematically shows a mmWave radar sensor being a part of the passenger counting device in fig. 1.

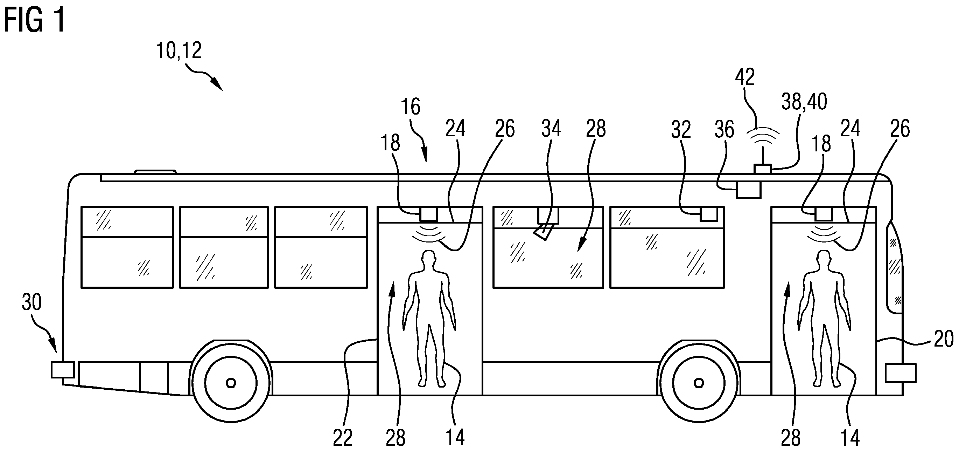

Fig. 1 shows in a perspective view a public transport vehicle 10, in particular a bus 12, which usually transports a certain number of passengers 14 via a predefined route from an entrance point to the desired destination.

In order to determine if the public transport vehicle 10 is using a route passengers 14 are highly interested in to ride along and if the riding schedule complies with the needs of potential passengers 14, the public transport vehicle 10 comprises a passenger counting device 16.

The passenger counting device 16 in the bus 12 in fig. 1 comprises as a main counting part two mmWave radar sensors 18, one of which is located in the area of a front door 20, wherein the second one is located in the area of a rear door 22.

In order to avoid irritation of the passengers 14, both mmWave radar sensors 18 are hidden behind a cover 24 such that they are invisible to passengers 14.

Both mmWave radar sensors 18 are configured to generate radar pulses 26 to predefined areas 28 within the bus 12. In the embodiment shown in fig. 1, two predefined areas 28 are located around front door 20 and rear door 22, respectively, but it is also possible to locate the mmWave radar sensors 18 such that other areas within the bus 12 are covered.

The mmWave radar sensors 18 are configured to receive reflection signals from the predefined areas 28.

A control unit 30 is configured to receive signals corresponding to the reflection signals and to obtain a corresponding signal strength over a reception time period during which the reflection signals are received by the mmWave radar sensors 18. Out of these received signal strengths over reception time, the control unit 30 is configured to count a number of passengers 14 according to the signal strengths, wherein the control unit 30 considers that the signal strengths are weakened in proportion to a reception time period.

The control unit 30 is located remotely to the mmWave radar sensors 18 in the backside area of bus 12. To transfer the reflection signals received by the mmWave radar sensors 18 to the control unit 30, a WIFI module 32 is provided within bus 12. This WIFI module 32 is configured such that a wireless transfer of data from the mmWave radar sensors 18 to the control unit 30 is possible.

Additionally, to the mmWave radar sensors 18 both covering a predefined area 28 of bus 12, a vision camera 34 is located inside the bus 12. The vision camera 34 in particular is an IR camera and takes series of pictures of a further predefined area 28 in the public transport vehicle 10. The data about this taken pictures are also transferred via the WIFI module 32 from the vision camera 34 to the control unit 30. The control unit 30 is configured such that the pictures are analyzed in order to count a number of passengers 14 in these taken pictures.

In the embodiment shown in fig. 1 the two mmWave radar sensors 18 cover different predefined areas 28 than the vision camera 34. In an alternative embodiment it is possible to generate redundant data by having the same predefined area 28 to be monitored by the vision camera 34 and at least one of the mmWave radar sensors 18.

In order to safe all data generated by the mmWave radar sensors 18 and the vision camera 34, a data logger 36 is provided inside bus 12, the data logger being configured to safe data about the counted numbers of passengers 14 generated by the control unit 30. Via the WIFI module 32 these generated data are transferred from the control unit 30 to the data logger 36. In order to be able to not only count the numbers of passengers 14 during a certain time slot within bus 12, a vehicle tracking module 38, in particular a GPS antenna 40, is provided on the bus 12. The vehicle tracking module 38 comprises a communication unit 42 which sends GPS signals generated by the GPS antenna 40 to the data logger 36. The data logger 36 is configured to safe these received GPS signals with the same timestamp as the data about the passenger numbers 14 counted by control unit 30. Therefore, it is possible to know at each geographic position of bus 12 how many passengers 14 were using this bus 12.

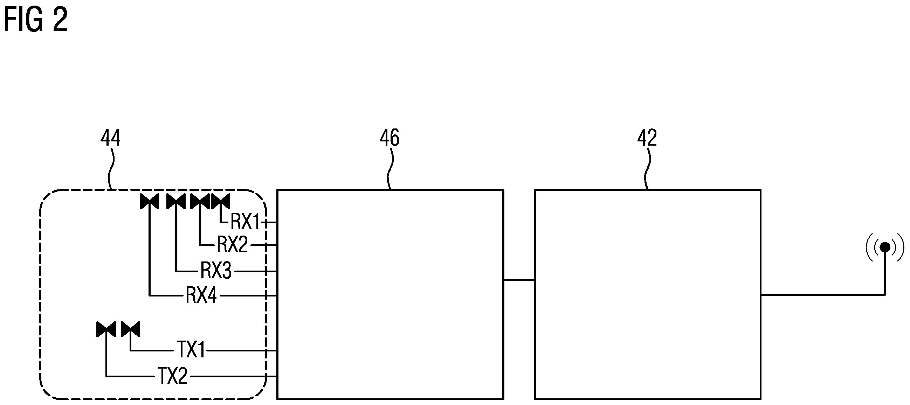

Fig. 2 shows schematically a part of the passenger counting device 16, in particular the configuration of the mmWave radar sensors 18 in fig. 1.

The mmWave radar sensor 18 in fig. 2 comprises an antenna structure 44 with components to transmit (TX1, TX2) and receive (RX1, RX2, RX3, RX4) radio frequencies. Further, a digital module block 46 is provided comprising a radar sensor, microcontroller and hardware accelerator as well as further digital components such as analog-to-digital converters and digital signal processors. Additionally, the communication unit 42 is provided to transmit signals to the control unit 30.

The advantages of the above-described passenger counting device 16 are:
- Open for multiple improvement and functionalities by software (the basic function can bring more information about the counted person);
- Very accurate (even over 95% in optimum conditions of use);
- Simple installation;
- No moving parts;
- No preventive maintenance required;
- Can be used in a wider system of artificial intelligence;
- Medical information about passengers may be collected (heart beats, detection of breathing, trembling).

### Reference list

- 10: public transport vehicle
- 12: bus
- 14: passenger
- 16: passenger counting device
- 18: mmWave radar sensor
- 20: front door
- 22: rear door
- 24: cover
- 26: radar pulse
- 28: predefined area
- 30: control unit
- 32: WIFI module
- 34: vision camera
- 36: data logger
- 38: vehicle tracking module
- 40: GPS antenna
- 42: communication unit
- 44: antenna structure
- 46: digital module block

## Claims

1. Passenger counting device (16) to count passengers (14) in a public transport vehicle (10), comprising:
- a mmWave radar sensor (18) configured to generate a radar pulse (26) to a predefined area (28) in the public transport vehicle (10), the radar pulse (26) having a wavelength in the millimeter range, the mmWave radar sensor (18) further being configured to receive a reflection signal from the predefined area (28);
- a control unit (30) configured to obtain a signal strength of the reflection signal over a reception time period during which the reflection signal is received by the mmWave radar sensor (18), the control unit further being (30) configured to count a number of passengers (14) according to the signal strength, considering that the signal strength is weakened in proportion to the reception time period.

2. Passenger counting device (16) according to claim 1,
**characterized in that** the wavelength of the radar pulse (26) lies in a range of 1 mm to 6 mm, in particular about 4 mm.

3. Passenger counting device (16) according to one of the claims 1 or 2, further comprising a vision camera (34) being configured to take a series of pictures of the predefined area (28) in the public transport vehicle (10), the control unit (30) being configured to analyze the pictures taken by the vision camera (34) to count a number of passengers (14) in the taken pictures.

4. Passenger counting device (16) according to one of the claims 1 to 3, **characterized by** a data logger (36) configured to safe data about the numbers of passengers (14) counted by the control unit (30), the passenger counting device (16) further comprising a WIFI module (32) configured to wireless transfer data from the control unit (30) to the data logger (36).

5. Passenger counting device (16) according to claim 4 and claim 3, **characterized in that** the WIFI module (32) further being configured to wireless transfer data from the mmWave radar sensor (18) and/or the vision camera (34) to the control unit (30).

6. Public transport vehicle (10) comprising a passenger counting device (16) according to one of the claims 1 to 5.

7. Public transport vehicle (10) according to claim 6,
**characterized in that** the mmWave radar sensor (18) being located in the vehicle (10) such that the mmWave radar sensor (18) is invisible to the passengers (14), wherein the mmWave radar sensor (18) in particular being hidden behind a cover (24).

8. Public transport vehicle (10) according to one of the claims 6 or 7,
further comprising a vehicle tracking module (38), in particular a GPS antenna (40), the vehicle tracking module (38) having a communication unit (42) to send GPS signals to the data logger (36), the data logger (36) being configured to safe the received GPS signals.
